# EUROPEAN PATENT APPLICATION

(11) **EP 1 768 017 A1**
(43) Date of publication of application: **28.03.2007**
(21) Application number: 05755602.9
(22) Date of filing: 29.06.2005
(51) Int. Cl.: G06F 3/12

(54) **DATA OUTPUT DEVICE, DATA OUTPUT METHOD, COMPUTER PROGRAM, AND RECORDING MEDIUM**

(30) Priority: 06.07.2004 JP 2004199663
(71) Applicant: SONY CORPORATION, Tokyo 141-0001 (JP)
(72) Inventor: TAKANO, Hiroaki, SONY CORPORATION, Tokyo 1410001 (JP); KURODA, Tatsuya, SONY CORPORATION, Tokyo 1410001 (JP)
(74) Representative: Keston, Susan Elizabeth
(86) International application number: PCT/JP2005/011988
(87) International publication number: WO 2006/003952

(57) **Abstract**

A data output apparatus can suitably be used for an automatic printing service apparatus for printing an image such as a photograph from the image data input from a recording medium. The data output apparatus computes the operating ratio of the automatic printing service apparatus and, when the computed operating ratio falls, it changes the charge to the charge associated with the fallen operating ratio and the display section (7) of the apparatus notifies that the charge is reduced. With this arrangement, it is possible to raise the operating ratio of the automatic printing service apparatus.

## Description

### Technical Field

This invention relates to a data output apparatus, a data output method, a computer program and a recording medium that can suitably be used for an automatic printing service machine for printing an image such as a photograph from the image data input from a recording medium and the like.

This application is based upon and claims the benefit of priority from the prior Japanese Patent Application No. 2004-199663, filed on July 6, 2004, the entire contents of which are incorporated herein by reference.

### Background Art

Automatic printing service apparatus are available for printing images. With such an apparatus, as a recording medium storing desired image data is mounted in it and a predetermined amount of money is put into it by one or more than one coins, it reads out the image data stored on the recording medium and displays one or more than one images from the read out image data. Then, it prints an image selected by the user. With such an automatic printing service apparatus, the user can print a desired photograph instantaneously.

A fixed charge for providing a predetermined service, for example, the charge for printing a photograph, is invariably set in known automatic printing service apparatus. Then, such known automatic printing service apparatus require human advertising efforts for raising the operating ratio.

### Disclosure of the Invention

In view of the above-identified problem, it is therefore an object of the present invention to provide a data output apparatus, a data output method, a computer program and a recording medium storing such a computer program that can change the service it provides to raise the operating ratio of the data output apparatus by computing the operating ratio.

In an aspect of the present invention, there is provided a data output apparatus comprising: a data output section for outputting data; a computing section for computing the operating ratio of an apparatus main body; a memory section for storing a plurality of predefined ranges of operating ratio and service data in association with each of the ranges; a comparing section for comparing a pre-selected range of operating ratio and the operating ratio computed by the computing section; a changing section for changing to the service data associated with some other range of operating ratio from the current service data when the operating ratio computed by the computing section is out of the pre-selected range of operating ratio; and a notifying section for notifying the change of service data.

In another aspect of the present invention, there is provided a data output method comprising: a comparing step of comparing the current range of operating ratio out of a plurality of ranges of operating ratio of the apparatus main body previously stored in the memory section and the operating ratio computed by the computing section; a changing step of changing to the service data associated with some other range of operating ratio from the current service data associated with the pre-selected range of operating ratio when the operating ratio computed by the computing section is out of the pre-selected range of operating ratio; and a notifying step of notifying the change of service data.

The present invention can be realized by means of hardware and/or software. A computer program according to the present invention comprises: a comparing step of comparing the current range of operating ratio out of a plurality of ranges of operating ratio of the apparatus main body previously stored in the memory section and the operating ratio computed by the computing section; a changing step of changing to the service data associated with some other range of operating ratio from the current service data associated with the pre-selected range of operating ratio when the operating ratio computed by the computing section is out of the pre-selected range of operating ratio; and a notifying step of notifying the change of service data.

The computer program can be distributed by means of recording mediums such as optical discs, magneto-optical discs, magnetic discs, IC cards and memory cards and also by way of networks such as the Internet.

Thus, according to the present invention, when the operating ratio as computed by the computing section is out of the pre-selected range of operating ratio, the current service data associated with the pre-selected range of operating ratio is changed to the service data associated with some other range of operating ratio and the notifying section notifies the change of service data. Then, it is possible to advertise the change of service without relying on human efforts to raise the operating ratio.

Other objects and the advantages of the present invention will become more apparent from the detailed description of a preferred embodiment of the invention given below by referring to the accompanying drawings.

### Brief Description of the Drawings

FIG. 1 is a schematic perspective view of an automatic printing service apparatus realized by applying the present invention;
FIG. 2 is a schematic block diagram of the automatic printing service apparatus of FIG. 1;
FIG. 3 is a table showing operating ratios in association with charges and stored in the operating ratio memory of the apparatus of FIG. 1;
FIG. 4 is a flowchart of the operation from computing the operating ratio to changing the charge; and
FIG 5 is a flowchart of the operation of the printing operation of the automatic printing service apparatus of FIG 1.

### Best Mode for Carrying Out the Invention

Now, a preferred embodiment of the present invention will be described in greater detail by referring to the accompanying drawings.

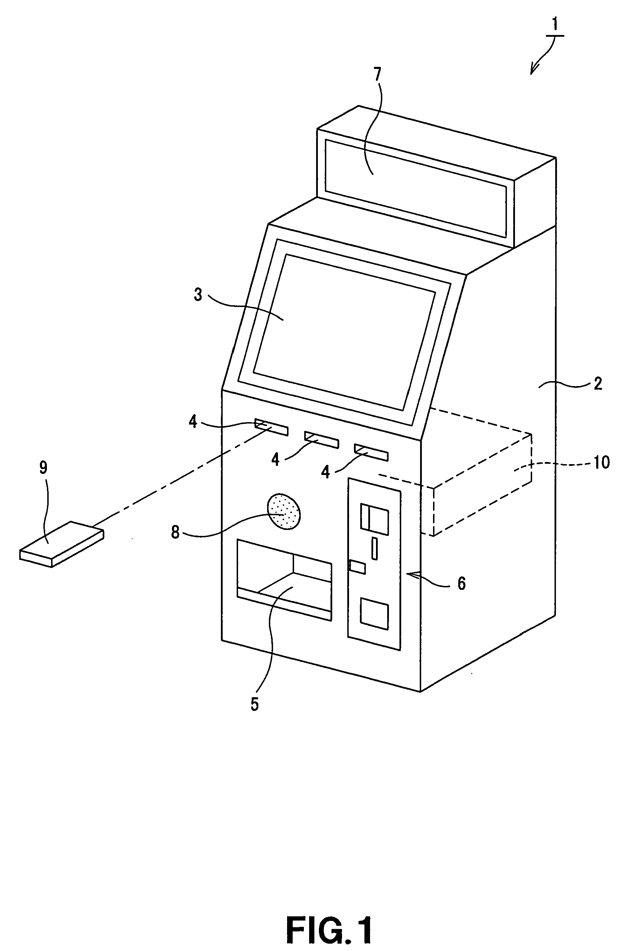

An automatic printing service apparatus realized by applying the present invention may typically be a kiosk terminal installed in a park, a railway station or some other public place and adapted to provide the service of printing an image from the image data stored on the recording medium that the user brings in, which may be an IC card or a memory card. As shown in FIG. 1, the automatic printing service apparatus 1 has an apparatus main body 2 whose profile is defined by an outer cabinet. The apparatus main body 2 is provided with a display/operation section 3 having various operation buttons and adapted to display an image from the image data stored in a recording medium, recording medium insertion slots 4 for receiving a recording medium storing image data and brought in by the user, a delivery port 5 for delivering the printed photograph, a coin slot section 6 for receiving predetermined coins, a display section 7 for advertisement, a speaker 8 for emitting audible sounds and a printer 10 for printing an image from image data.

The display/operation section 3 is typically a plate-shaped tablet having a sensor section and operates both as a display section and an operation section. As a recording medium is inserted into one of the recording medium insertion slots 4, one or more than one images are displayed on the display/operation section 3 from the image data stored in the inserted recording medium. The display/operation section 3 also displays various buttons including a selection button for selecting the image or one of the images being displayed and a printing button for printing the selected image. As the buttons being displayed are depressed, the display/operation section 3 detects the depressed buttons and generates an operation signal in response. The display/operation section 3 may be replaced by an operation section having operation buttons that are push buttons and arranged at some other position on the apparatus main body 2 and a display section that is an LCD (liquid crystal display) or a CRT (cathode ray tube) and arranged at the position of the display/operation section 3.

A plurality of recording medium insertion slots 4 are arranged to accommodate recording mediums 9 of different types. Each of the recording medium insertion slots 4 includes a mount section where the inserted recording medium 9 is mounted and a read out section 16 for reading out the image data recorded on the recording medium 9 that is mounted on the mount section. Note, however, that only a single recording medium insertion slot 4 is provided when the apparatus main body 2 can accommodate a single type of recording medium 9. Recording mediums that the apparatus main body 2 may accommodate include IC cards, memory cards, optical discs and disc cartridges.

The delivery port 5 delivers the photograph printed from the image data by the printer 10 contained in the apparatus main body 2. The printer 10 may be a thermal sublimation type printer having a thermal head or an ink jet type printer and is adapted to print the image selected by the user from the image data on a predetermined sheet of paper.

The coin slot section 6 has a coin mech mechanism and operates to treat money. For instance, the charges for printing images are preset and the coin slot section 6 detects the amount of money entered through the coin slot by one or more than one coins and permits printing an image when the amount of money is not less than the predetermined corresponding charge.

The display section 7 is provided as advertisement means and formed by using an LCD or a CRT. If there is a change in the charge for printing an image, the display section 7 displays a message for the change and the new charge. The display section 7 may be used for some other advertisement. The display section 7 may be omitted when display/operation section 3 takes the role of the display section 7 and displays advertisements. If there is a change in the charge for printing an image, the speaker 8 announces a message for the change and the new charge to cooperate with the display section 7. It may announce some other advertisements.

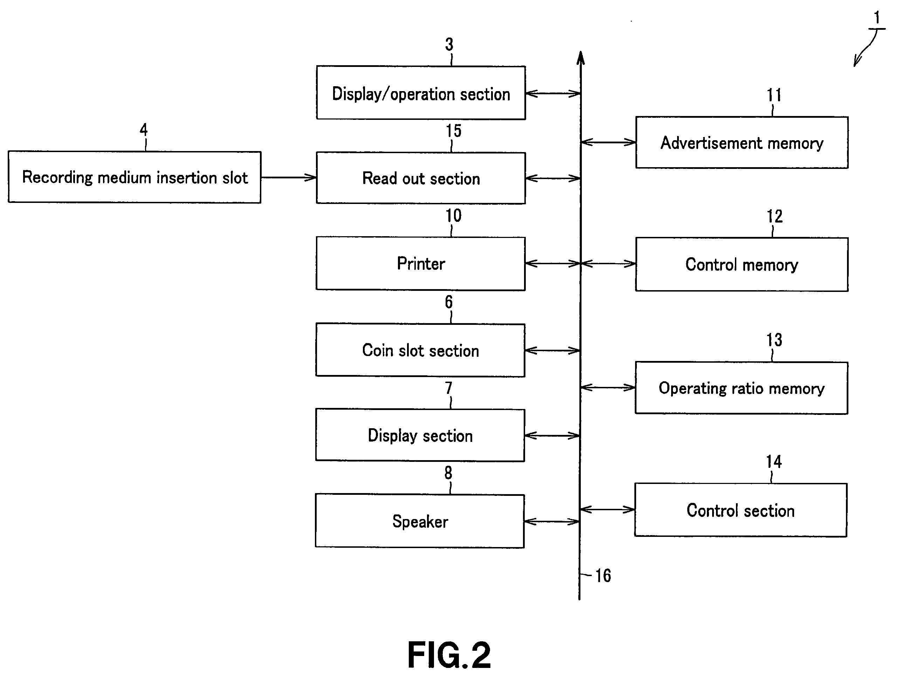

Now, the circuit configuration of the automatic printing service apparatus 1 having the above-described configuration will be described below by referring to FIG. 2. As shown in FIG 2, in the automatic printing service apparatus 1, an advertisement memory 11 storing data and programs for the advertisements to be displayed on the display section 7, a control memory 12 storing the control program or the like of the apparatus main body 2, an operating ratio memory 13 storing the relationship between operating ratios and charges and a control section 14 for controlling the overall operation of the apparatus according to the control program are connected to each other by way of a bus 16. The memories 11, 12, 13 may typically be EP-ROMs (erasable programmable read-only memory), although they may be some other memories. The display/operation section 3, the read out sections 15 arranged at the respective recording medium insertion slots 4 to read data from a recording medium 9, the printer 10, the coin slot section 6, the display section 7 and the speaker 8 are also connected to the bus 16.

The control memory 12 stores the control program for controlling the entire apparatus and other programs such as the program for computing the operating ratio of the apparatus main body 2. For the purpose of the present invention, the operating ratio may be any of the three operating ratios defined below.

1 st operating ratio: the value obtained by dividing the total time from the time when a recording medium 9 is inserted into one of the recording medium insertion slots 4 and detected by the read out section 15 to the time when the operation of printing the selected image ends by a predetermined unit time.

This operating ratio pays attention to the time for which the customer occupies the automatic printing service apparatus 1 for printing an image.

2nd operating ratio: the value obtained by dividing the number of sheets printed by the printer 10 by a predetermined unit time.

This operating ratio pays attention to the number of sheets, or the receipts.

3rd operating ratio; the value obtained by dividing the total time from the time when a recording medium 9 is inserted into one of the recording medium insertion slots 4 and detected by the read out section 15 to the time when the recording medium 9 is taken out form the recording medium insertion slot 4 by a predetermined unit time.

This operating ratio pays attention to the time for which the customer occupies the automatic printing service apparatus 1, or the degree of interest in the apparatus on the part of the customer, regardless if he of she actually prints an image or not.

While there may be other definitions of operating ratio, a definition is selected for the control section 14 by an operation of the manager of the apparatus depending on the position where the automatic printing service apparatus 1 is installed. While the unit time may be a day, 12 hours, 6 hours or an hour, the operating ratio can be computed nearly on a real time basis when a short unit time is selected.

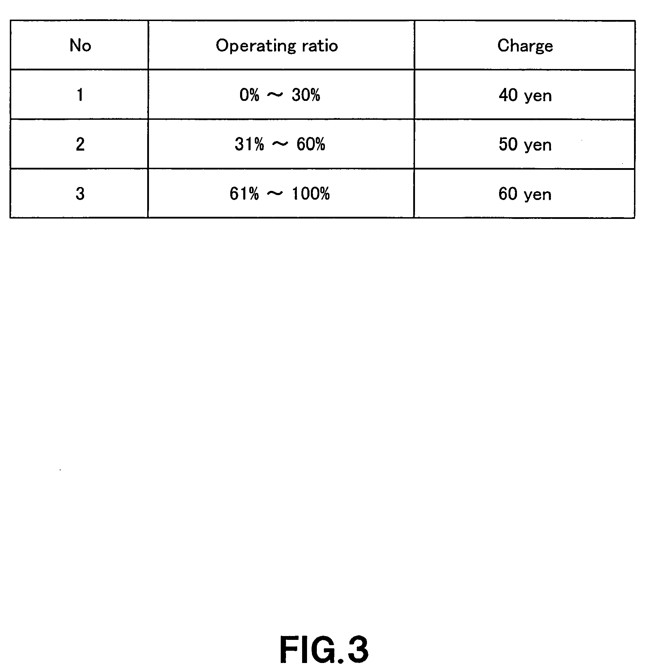

Referring to FIG 3, the operating ratio memory 13 stores a table showing operating ratios in association with charges and stored in the operating ratio memory 13. The table shows a plurality of numerical ranges of operating ratio and each of the ranges is associated with a charge. As shown in FIG 3, three ranges of operating ratio of 0% through 30%, 31 % through 60% and 61 % through 100% are provided and the range of operating ratio of 0% through 30% is associated with 40 yen, while the range of operating ratio of 31% through 60% is associated with 50 yen and the range of operating ratio of 61 % through 100% is associated with 60 yen, although the ranges of operating ratio and the associated charges are not limited to those of FIG 3.

The advertisement memory 11 stores the data and the programs for the advertisements to be displayed on the display section 7. For example, the notification data for notifying a fall of the operating ratio when the operating ratio of the automatic printing service apparatus 1 falls are stored in it.

The control section 14 has a CPU (central processing unit), an internal memory and a timer. For instance, the timer counts a predetermined time and the CPU computes the operating ratio per unit time. If the range of operating ratio is changed, the control section 14 changes the setting of the coin slot section 6 to that of the charge associated with the newly selected range of operating ratio, while it reads out the related advertisement data from the advertisement memory 11 and display the related advertisement on the display section 7 to notify the change of charge.

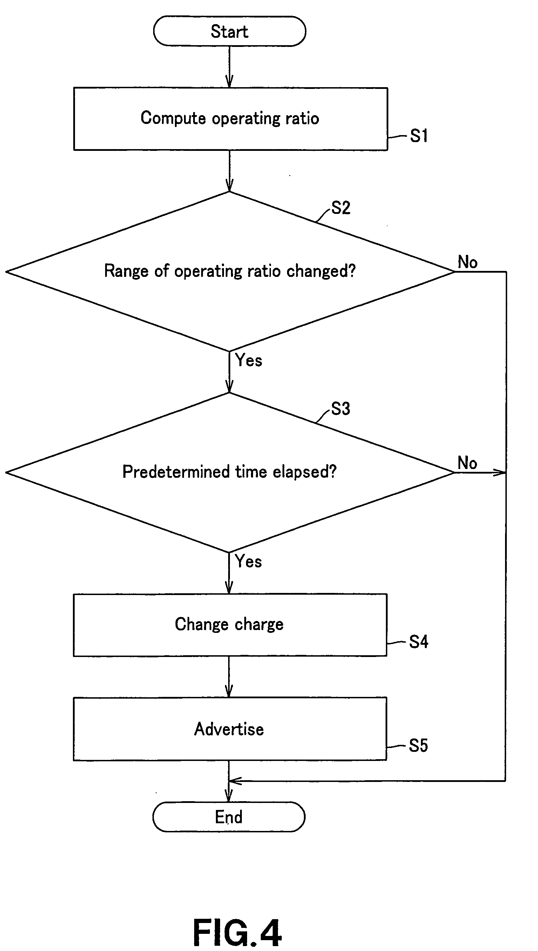

Now, the overall operation of the automatic printing service apparatus 1 will be described below by referring to FIG. 4.

Referring to FIG. 4, in Step S1, the control section 14 computes the current operating ratio of the automatic printing service apparatus 1. More specifically, the above-listed three definitions of operating ratio are provided and the control section 14 computes the current operating ratio according to the selected definition of operating ratio.

In Step S2, the control section 14 determines if the range of operating ratio is changed or not. This will be described by referring to FIG. 3. If the range of operating ratio of 31 % through 60% is currently selected and hence 50 yen is set as charge at the coin slot section 6. Then, the control section 14 determines if the range of operating ratio belongs to which one of the numbers 1 through 3 in FIG. 3. The control section 14 ends the process when there is no change for the range of operating ratio, whereas it proceeds to Step S3 when there is a change for the range of operating ratio.

When there is a change for the range of operating ratio, the control section 14 determines if a predetermined time, e.g., 1 minute, has elapsed since the end of the immediately preceding operation or not. This is because, if the customer who utilized the apparatus immediately before the change of charge is still remaining near the automatic printing service apparatus 1, he or she may feel repugnant. Thus, the control section 14 proceeds to Step S4 when the predetermined time has elapsed, whereas it ends the process without changing the charge when the predetermined time has not elapsed.

In Step S4, the control section 14 determines the number in FIG 3 to which the computed operating ratio belongs by referring to the operating ratio memory 13 and, if necessary, changes the setting of the coin slot section 6 to which the computed operating ratio belongs. This will be described below by way of a specific example, referring to FIG. 3. If the range of operating ratio of 31 % through 60% and hence the charge of 50 yen are selected currently and the computed operating ratio is 10%, the setting of the coin slot section 6 is changed to 40 yen that is associated with No. 1 in FIG 3. If, on the other hand, the computed operating ratio is 80%, the setting of the coin slot section 6 is changed to 60 yen that is associated with No. 3 in FIG 3.

In Step S5, the control section 14 reads out the corresponding notification data from the advertisement memory 11 and displays the notification on the display section 7. If the operating ratio falls and the charge is changed from 50 yen to cheaper 40 yen, the control section 14 notifies that the charge is reduced to 40 yen to a customers' advantage. When the charge is raised, it may be not necessary to notify the raise at the display section 7.

With the above-described process, it is possible to change the setting for the charge at the coin slot section 6 to a lower one and notify the change to a lower setting at the display section 7 when the operating ratio has fallen to a low level and hence the receipts have fallen. Then, it is possible to raise the operating ratio when it is low. On the other hand, it is possible to change the setting for the charge at the coin slot section 6 to a higher one to raise the profit rate when the operating ratio and hence the receipts have risen.

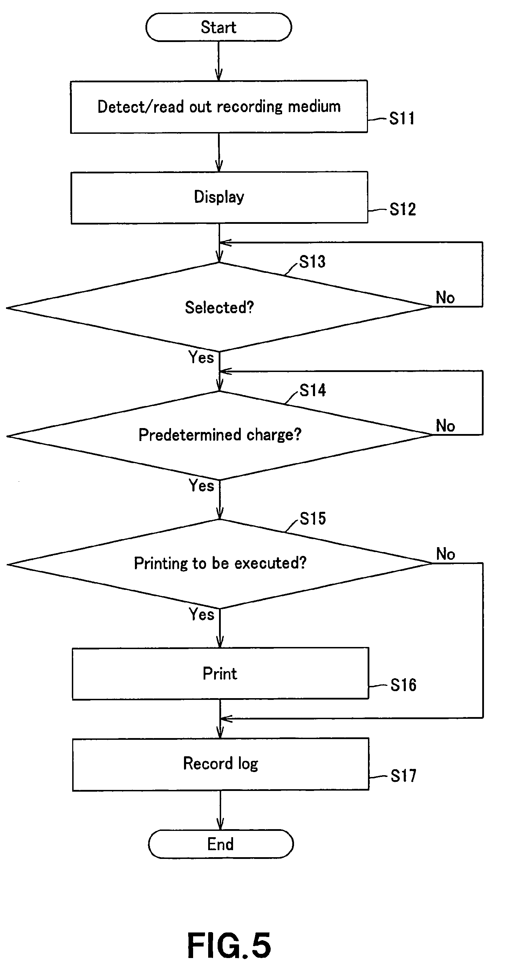

Now, the printing operation of the automatic printing service apparatus 1 will be described below by referring to FIG 5. Referring to FIG 5, in Step S11, as a recording medium is inserted into the corresponding one of the recording medium insertion slots 4, the control section 14 reads out the image data of one or more than one images recorded on the inserted recording medium 9 by means of the read out section 15. In Step S 12, the control section 14 displays the one or more than one images read out from the recording medium 9 on the display/operation section 3 typically as a thumbnail image. At the same time, the control section 14 displays various operation buttons such as an image selection button and a printing enter button on the display/operation section 3 based on the program of the control memory 12. Then, in Step S 13, the control section 14 determines if an image is selected from the image or images displayed on the display/operation section 3. The control section 14 proceeds to Step S 14 when it is determined that an image is selected, whereas it repeats Step S 13 when it is determined that no image is selected.

As an image selected for printing, the control section 14 computes the amount of money to be charged according to the number of copies to be printed and the current charge data and displays it on the display/operation section 3. Then, the control section 14 determines if that amount of money is paid to the coin slot section 6 or not. The control section 14 proceeds to Step S 15 when the amount of money is paid to the coin slot section 6, whereas it repeats Step S 14 when the amount of money paid to the coin slot section 6 has not got to that amount or when no money has been paid yet.

In Step S 15, the control section 14 determines if the printing enter button is operated for printing one or more than one images selected by the customer or not. Then, the control section 14 proceeds to Step S16 to print the selected one or more than one images when the printing enter button is operated and delivers the printed image or images, or photograph or photographs, from the delivery port 5. On the other hand, the control section 14 proceeds to Step S 17 to record a log when the printing is canceled. More specifically, the control section 14 stores a log showing the time and date of insertion of the recording medium, the time and date of taking out of the recording medium, the number of printed sheets and the like in a predetermined recording region of the control memory 12. The above operating ratio is computed on the basis of the recorded logs. Note that the time and date of taking out of any recording medium that is inserted into any of the recording medium insertion slots 4 and taken out without a printing operation is also recorded as a log, considering the case of computing the above-described third operating ratio obtained according to the total time from the time when a recording medium 9 is inserted into one of the recording medium insertion slots 4 and detected by the read out section 15 to the time when the recording medium is taken out from the recording medium insertion slot 4.

With the above-described automatic printing service apparatus 1, a lower charge is set when the operating ratio falls and the discount is notified to raise the popularity of the apparatus. However, the present invention is by no means limited to such an arrangement. For example, it may be so arranged that the service of large size printing is provided free in place of changing the charge when the range of operating ratio shown in FIG. 3 is changed. More specifically, it may be so arranged that customers can print a large size image free when the operating ratio is changed from No. 2 to No. 1 in FIG. 3 and the free service is notified at the display section 7.

Furthermore, the automatic printing service apparatus 1 may be so adapted to sell contents data such as music data and/or video data and provide a special service such as a discount service when the operating ratio falls to a low level.

The present invention is by no means limited to the embodiment described above by referring to the accompanying drawings, which may be modified, altered and/or replaced in various different ways without departing from the spirit and scope of the invention.

## Claims

1. A data output apparatus comprising:
data output means for outputting data;
computing means for computing the operating ratio of an apparatus main body;
memory means for storing a plurality of predefined ranges of operating ratio and service data in association with each of the ranges;
comparing means for comparing a pre-selected range of operating ratio and the operating ratio computed by the computing means;
changing means for changing to the service data associated with some other range of operating ratio from the current service data when the operating ratio computed by the computing means is out of the pre-selected range of operating ratio; and
notifying means for notifying the change of service data.

2. The apparatus according to claim 1, further comprising:
input means for inputting data.

3. The apparatus according to claim 1, wherein the data are image data and the output means is a printer.

4. The apparatus according to claim 2, wherein the operating ratio is the value obtained by dividing the total time from the time when a recording medium is mounted in the input means to the time when the data output operation of the output means ends by a predetermined unit time.

5. The apparatus according to claim 1, wherein the operating ratio is the value obtained by dividing the number of times of output by a predetermined unit time.

6. The apparatus according to claim 2, wherein the operating ratio is the value obtained by dividing the total time from the time when a recording medium is mounted in the input means to the time when the recording medium is taken out form the input means by a predetermined unit time.

7. The apparatus according to claim 1, wherein the service data are charge data.

8. A data output method comprising:
a comparing step of comparing the current range of operating ratio out of a plurality of ranges of operating ratio of the apparatus main body previously stored in the memory means and the operating ratio computed by the computing means;
a changing step of changing to the service data associated with some other range of operating ratio from the current service data associated with the pre-selected range of operating ratio when the operating ratio computed by the computing means is out of the pre-selected range of operating ratio; and
a notifying step of notifying the change of service data.

9. The method according to claim 8, further comprising:
an input step for inputting data;
the method being adapted to output the input data in a different form.

10. The method according to claim 8, wherein the data are image data and an image is printed from the image data.

11. The method according to claim 9, wherein the operating ratio is the value obtained by dividing the total time from the time when a recording medium is mounted to the time when the data output operation ends by a predetermined unit time.

12. The method according to claim 8, wherein the operating ratio is the value obtained by dividing the number of times of output by a predetermined unit time.

13. The method according to claim 9, wherein the operating ratio is the value obtained by dividing the total time from the time when a recording medium is mounted to the time when the recording medium is taken out by a predetermined unit time.

14. The method according to claim 8, wherein the service data are charge data.

15. A computer executable computer program comprising:
a comparing step of comparing the current range of operating ratio out of a plurality of ranges of operating ratio of the apparatus main body previously stored in the memory means and the operating ratio computed by the computing means;
a changing step of changing to the service data associated with some other range of operating ratio from the current service data associated with the pre-selected range of operating ratio when the operating ratio computed by the computing means is out of the pre-selected range of operating ratio; and
a notifying step of notifying the change of service data.

16. A recording medium storing a computer executable computer program, the computer program comprising:
a comparing step of comparing the current range of operating ratio out of a plurality of ranges of operating ratio of the apparatus main body previously stored in the memory means and the operating ratio computed by the computing means;
a changing step of changing to the service data associated with some other range of operating ratio from the current service data associated with the pre-selected range of operating ratio when the operating ratio computed by the computing means is out of the pre-selected range of operating ratio; and
a notifying step of notifying the change of service data.
